# EUROPEAN PATENT APPLICATION

(11) **EP 4 790 979 A1**
(43) Date of publication of application: **12.08.2026**
(21) Application number: 24882712.3
(22) Date of filing: 14.10.2024
(51) Int. Cl.: H04N 7/15, H04N 7/14, H04L 12/18, H04L 51/043

(54) **DEVICE AND METHOD FOR PROVIDING TELEPRESENCE CONFERENCE SERVICE**

(30) Priority: 25.10.2023 KR 20230144123
(71) Applicant: Samsung Electronics Co., Ltd., Suwon-si, Gyeonggi-do 16677 (KR)
(72) Inventor: OH, Gyubong, Suwon-si Gyeonggi-do 16677 (KR)
(74) Representative: Gulde & Partner
(86) International application number: PCT/KR2024/015475
(87) International publication number: WO 2025/089685

(57) **Abstract**

An embodiment of the present invention relates to a method for providing a telepresence conference service, the method including: an operation of exchanging configuration information with a user terminal to identify whether a user is attending a conference; an operation of transmitting a control message to the user terminal to identify whether the user is attending the conference; an operation of transmitting, to the user terminal, an initiation message to measure a location of the user; an operation of receiving, from the user terminal, a response message corresponding to the initiation message; an operation of transmitting a measurement report message to the user terminal; and an operation of receiving, from the user terminal, a result report message indicating whether the user is attending the conference.

## Description

### [Technical Field]

The disclosure relates to a device for providing a telepresence conference service and an operation method thereof.

### [Background Art]

Telepresence refers to a technology or experience that replaces a person, equipment, or a robot physically absent from a remote location and makes them feel as if they exist in that location. This technology is used to enhance interaction with users at a distance through high-definition video, voice calls, robot control, and virtual reality technologies. Telepresence can be utilized in various fields such as business meetings, medical diagnosis, education, and entertainment, through which one can participate and collaborate more effectively in remote locations.

When telepresence technology is applied to business meetings, immersive video conferencing is possible. That is, people in remote locations can perform real-time meetings and collaboration through high-quality video and audio communication technologies as if they were in the same place. For example, participants in different meeting rooms can communicate by transmitting and receiving video and audio of each meeting room through telepresence devices, and a participant attending online from a location other than a meeting room can also communicate. Telepresence technology can provide an environment where mutual communication is possible for offline participants and online participants participating in a meeting.

However, telepresence technology does not mean that people actually exist in the same place. Accordingly, technical constraints may occur depending on the purpose of the meeting. For example, when a vote of participants is required for decision-making, it may be important whether a meeting participant actually attended the meeting. However, when online participants and offline participants are mixed and participating in a meeting as described above, a determination on whether an offline participant attended the meeting inevitably has to be performed directly by someone. As such, there are cases where information related to a meeting still needs to be directly produced by a person, and there is a need for a technology capable of automatically producing information required for a meeting.

The above-described information may be provided as a background art (related art) for the purpose of helping understanding of the present disclosure. No claim or determination is made as to whether any of the above-described contents can be applied as a prior art related to the present disclosure.

### [Disclosure of Invention]

### [Solution to Problem]

A method performed by a meeting control device according to an embodiment of the present disclosure includes: exchanging configuration information for confirming meeting attendance with a user terminal; transmitting a control message for confirming the meeting attendance to the user terminal; transmitting an initiation message for measuring a location of a user to the user terminal; receiving a response message corresponding to the initiation message from the user terminal; transmitting a measurement report message to the user terminal; and receiving a result report message indicating whether the user has attended the meeting from the user terminal.

A method performed by a meeting control device according to an embodiment of the present disclosure includes: exchanging configuration information for confirming meeting attendance with a user terminal; transmitting a control message for confirming the meeting attendance to the user terminal; transmitting an initiation message for measuring a location of a user to the user terminal; receiving a response message corresponding to the initiation message from the user terminal; receiving a measurement report message from the user terminal; generating information indicating whether the user has attended the meeting; and transmitting the information indicating whether the user has attended the meeting to a server providing a meeting service.

### [Brief Description of Drawings]

FIG. 1 is a block diagram of an electronic device in a network environment according to an embodiment.
FIG. 2 is a block diagram illustrating a conference situation according to an embodiment.
FIG. 3 is a diagram illustrating a conference situation according to an embodiment.
FIG. 4 illustrates a process of transmitting and receiving information between a conference control device and user terminals according to an embodiment.
FIG. 5 illustrates a process of transmitting and receiving information between a conference control device and a user terminal according to an embodiment.
FIG. 6 illustrates configuration information according to an embodiment.
FIG. 7 illustrates a process of transmitting and receiving information between a conference control device and a user terminal according to an embodiment.
FIG. 8 illustrates a process of transmitting and receiving information between a conference control device and a user terminal according to an embodiment.
FIG. 9 illustrates information included in a control message according to an embodiment.
FIG. 10 illustrates information included in a measurement report message according to an embodiment.
FIG. 11 illustrates information included in a ranging result report message according to an embodiment.
FIG. 12 illustrates detailed information of a ranging result report message according to an embodiment.
FIG. 13 illustrates UWB configuration information according to an embodiment.
FIG. 14 illustrates UWB configuration information according to an embodiment.
FIG. 15 illustrates a flowchart of an operation of a conference control device according to an embodiment.
FIG. 16 illustrates a flowchart of an operation of a conference control device according to an embodiment.
FIG. 17 illustrates components of a device according to an embodiment.

### [Best Mode for Carrying out the Invention]

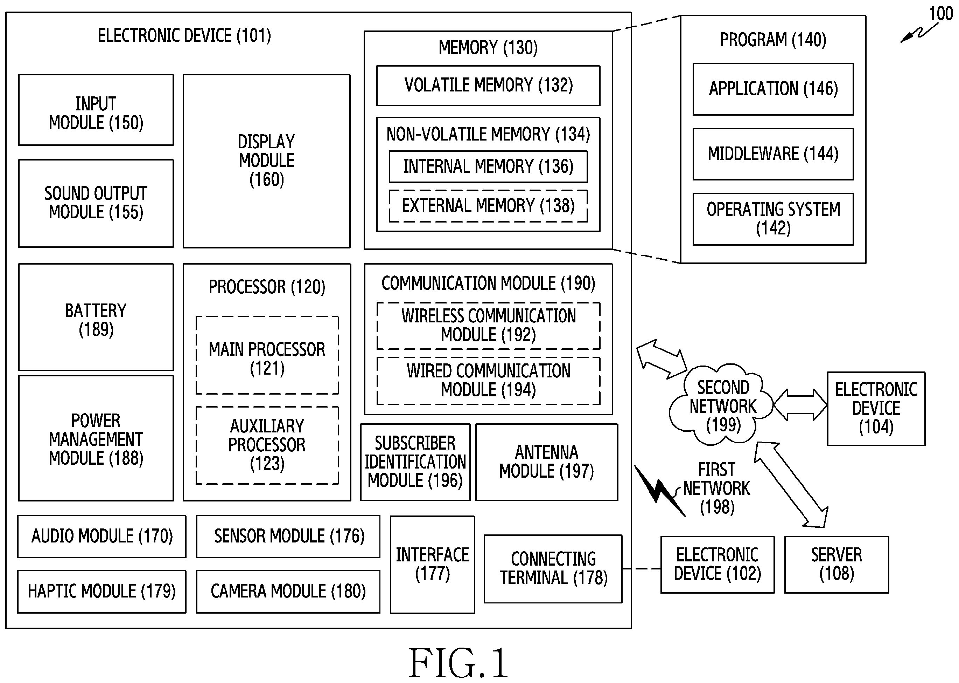

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial model may be generated through machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited to the above examples. Additionally or alternatively, the artificial intelligence model may include a software structure, in addition to the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

In an embodiment, a UWB refers to a wireless communication technology using a bandwidth of 500MHz or above according to the IEEE 802.15.4 standard, and owing to its characteristics resulting from use of a wide frequency band, can be used to accurately measure a distance and an angle. In the IEEE 802.15.4z standard, a scrambled timestamp sequence (STS) function for preventing access to or manipulation of UWB communication by an external attacker in a physical layer has been introduced to enhance security and thus increase the utility of the UWB.

The wireless communication module 192 may support a 5G network, after a 4G network, and next-generation communication technology, e.g., new radio (NR) access technology. The NR access technology may support high-speed transmission of high-capacity data (enhanced mobile broadband (eMBB)), terminal power minimization and multi-terminal access (massive machine type communications (mMTC)), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed on a substrate (e.g., a PCB). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to some embodiments, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed at a first surface (e.g., the lower surface) of the printed circuit board or adjacent thereto and capable of supporting specified high-frequency bands (e.g., mmWave bands), and a plurality of antennas (e.g., an array antenna) disposed at a second surface (e.g., the upper or side surface) of the printed circuit board or adjacent thereto and capable of transmitting or receiving signals in the specified high-frequency bands.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To this end, a cloud computing, distributed computing, mobile edge computing (MEC), or client-server computing technology may be used, for example. The electronic device 101 may provide, for example, ultra low-latency services using distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include codes generated by a compiler or code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., module or program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

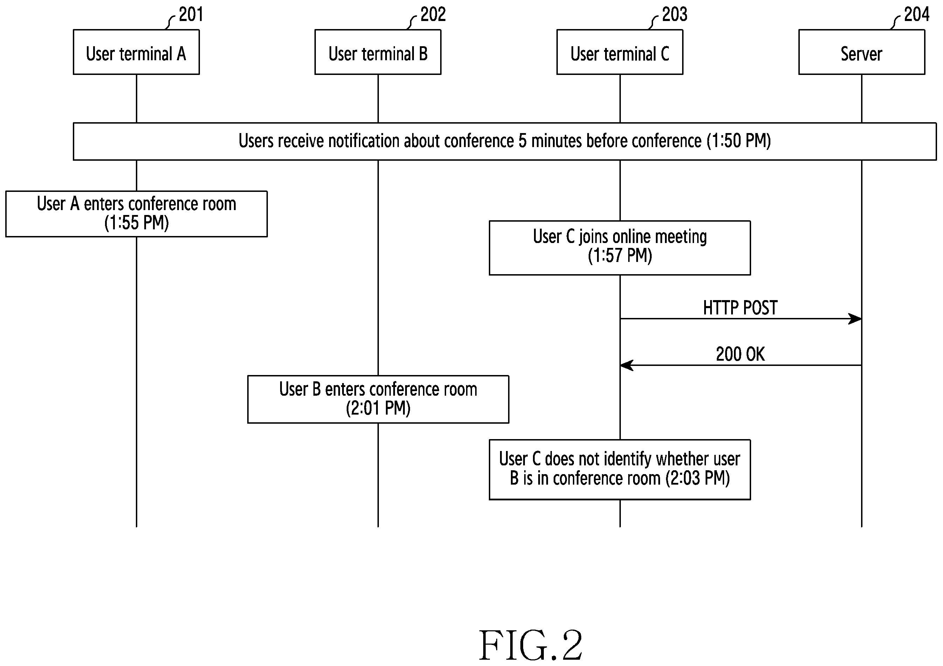

FIG. 2 is a block diagram illustrating a conference situation according to an embodiment.

Referring to FIG. 2, a server 204 for providing a remote conference service and user terminals A, B, and C of users who are to attend a conference are illustrated. The users may be distinguished by user terminal A 201, user terminal B 202, and user terminal C 203 owned by the respective users.

According to a scenario illustrated in FIG. 2, the users may receive a conference notification through their user terminals before a conference starts. The notification may be a notice transmitted from the server 204 to the user terminals to notify the users of a conference schedule before the conference starts.

In addition, user A has physically entered a conference room which is a conference location, and user B has also physically entered the conference room. However, user C has participated in the conference through an online connection. In such a situation, the user C cannot determine whether the user A and the user B are actually present at the conference location. Further, the server 204 which provides the conference service is unable to determine the status of users who are physically present at the conference.

In such a situation, when information on the status of offline attendees is required for the purpose of the conference, a problem arises in that the status information is required to be manually identified by a person on-site. The information on the status of offline attendees may include the number of offline attendees within a conference space, whether each user is present, and the like.

Embodiments of the disclosure relate to a method and a device capable of generating status information on offline attendees in a conference environment in which offline and online attendees coexist, and thus generating and using information on all users attending a conference.

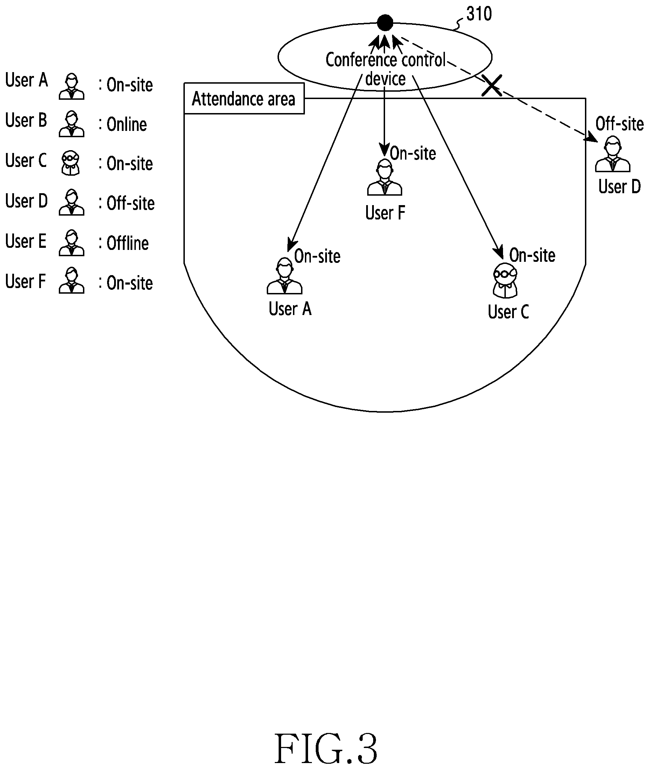

FIG. 3 is a diagram illustrating a conference situation according to an embodiment.

Referring to FIG. 3, a conference control device 310 provided at a conference location and attendance status of respective users who are to attend a conference are illustrated.

Referring to FIG. 3, an attendance area set based on the conference control device 310 is displayed, and it is identified that user A, user C, and user F are located within the attendance area, while user D is located outside the attendance area. In addition, user B is attending a conference through an online connection, and user E is indicated as being in an offline state.

For the user A, user C, user D, and user F who are physically located near a conference location, the user A, user C, and user F are located within the attendance area and thus may be determined to be present at the conference (On-site), and the user D is located outside the attendance area and thus may be determined not to be present at the conference (Off-site). Such determinations may be performed by a user terminal owned by each user or by the conference control device.

Information on whether each user is present at a conference, which is generated by the conference control device 310 or the user terminal, may be collected and used to generate other information related to the conference. In addition, such information may also be used as information for granting voting rights to each user during decision-making in the conference.

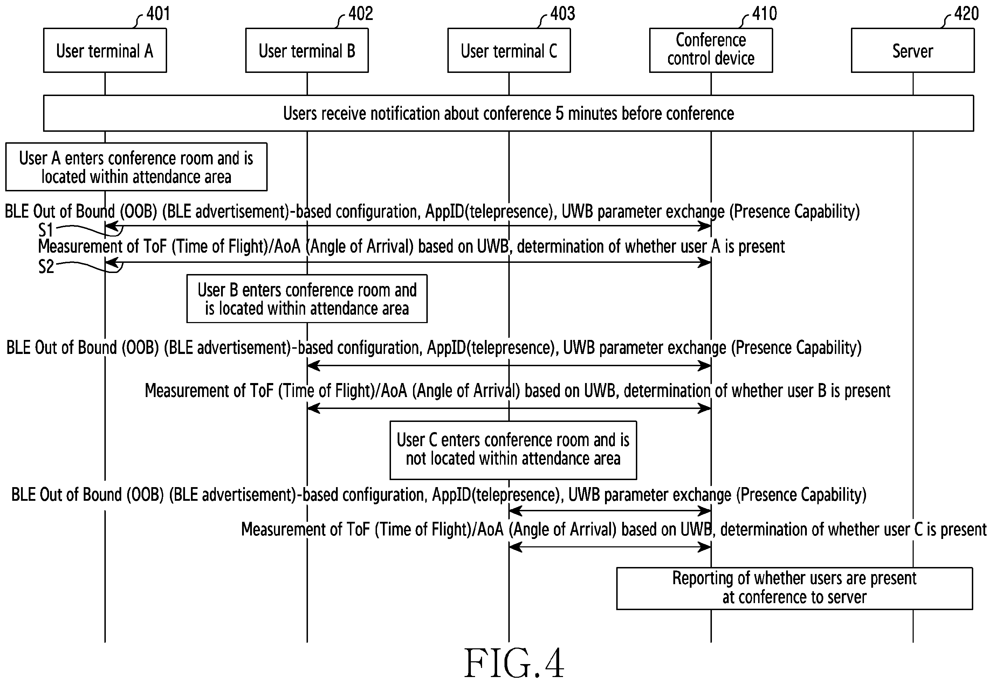

FIG. 4 illustrates a process of transmitting and receiving information between a conference control device and user terminals according to an embodiment.

FIG. 4 illustrates an operation performed by a conference control device 410 or user terminals 401, 402, and 403 to provide a telepresence conference service described with reference to FIG. 3.

Referring to FIG. 4, a user (or a person who is to attend a conference) may receive a notification message through the user terminal 401, 402, or 403 before a conference starts.

When user A enters a conference room and is located within an attendance area (refer to the attendance area in FIG. 3), user terminal A 401 of the user A may exchange information for establishing a connection with the conference control device 410. That is, in operation S1, the user terminal A 401 and the conference control device 410 may transmit and receive information for connection establishment. In addition, the corresponding configuration information may be signaled to the user terminal A 401 or the conference control device 410 through higher-layer signaling and may be thus used to establish the connection.

In addition, in operation S1, the user terminal A 401 and the conference control device 410 may transmit and receive configuration information through a Bluetooth out-of-band (OOB) or a Bluetooth advertising message. The configuration information may include identifier information of an application for providing a conference service and parameter information for a connection based on ultra-wideband (UWB). In addition, the configuration information may further include reference information for determining whether the user terminal A is located within the attendance area.

In operation S2, the user terminal A 401 and the conference control device 410 may exchange measurement information, such as a time of flight (ToF) value and an angle of arrival (AoA) value, based on UWB communication. In addition, the user terminal A 401 and the conference control device 410 may generate information indicating whether the user terminal A is located within an attendance area of a conference location, based on the measurement information.

In the case of the user A, since the user A is located within the attendance area of the conference location, the user A is determined to be present at the conference. (The same applies to user B.)

Meanwhile, in the case of user C, although the user C has entered the conference room, the user C is not located within the attendance area (refer to the attendance area in FIG. 3). Alternatively, the user C may be located outside the conference room. User terminal C 403 of the user C may exchange information for establishing a connection with the conference control device 410. That is, the user terminal C 403 and the conference control device 410 may transmit and receive information for connection establishment. In addition, the corresponding configuration information may be signaled to the user terminal C 403 or the conference control device 410 through higher-layer signaling and may be thus used to establish the connection.

In addition, the user terminal C 403 and the conference control device 410 may transmit and receive configuration information through a Bluetooth out-of-band (OOB) or a Bluetooth advertising message. The configuration information may include identifier information of an application for providing a conference service and parameter information for a connection based on ultra-wideband (UWB). In addition, the configuration information may further include reference information for determining whether the user terminal C is located within the attendance area.

In addition, the user terminal C 403 and the conference control device 410 may exchange measurement information, such as a time of flight (ToF) value and an angle of arrival (AoA) value, based on UWB communication. In addition, the user terminal C 403 and the conference control device 410 may generate information indicating whether the user terminal C is located within an attendance area of a conference location, based on the measurement information.

Since the user C is not located within the attendance area, the user C is determined to be not present at the conference.

The conference control device 410 may receive, from the user terminals, information indicating whether the users are present at the conference, or may generate information indicating whether the users are present at the conference. In addition, the conference control device 410 may transmit the information indicating whether the users are present at the conference to the server 420. The server 420 may provide a telepresence conference service, based on the information indicating whether the users are present at the conference.

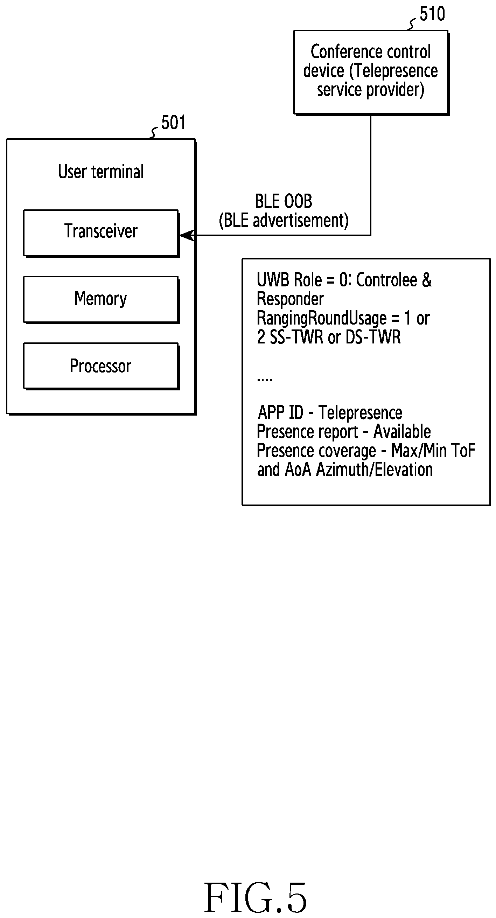

FIG. 5 illustrates a process of transmitting and receiving information between a conference control device 510 and a user terminal 501 according to an embodiment.

The conference control device 510 and the user terminal 501 illustrated in FIG. 5 may correspond to the conference control device and the user terminal described with reference to FIGS. 3 and 4, respectively.

Referring to FIG. 5, the conferencing control device 510 and the user terminal 501 may transmit and receive information based on a Bluetooth advertisement (BLE advertisement) or a Bluetooth out-of-band (OOB) scheme. In this case, the information transmitted and received may include UWB configuration information (or UWB parameters), an application identifier (APP ID) indicating a telepresence service, reference information for determining whether a user is present at a conference, and information indicating whether a presence report is supported.

The UWB configuration information (or UWB parameter) may include configuration information for enabling the conference control device 510 and the user terminal 501 to perform UWB-based communication. For example, the configuration information may include information on a ranging method, information on a communication mode, information indicating the role of a device, information indicating the type of the device, and configuration information regarding a result report.

The reference information for determining whether the user is present at the conference may include a minimum value and a maximum value of a time of flight (ToF), azimuth range information of an angle of arrival (AoA), and elevation range information of the AoA.

The ToF may indicate a time of flight of a radio wave, and an arrival time of the radio wave may be multiplied by the speed of light to indicate distance information. Therefore, the minimum value and the maximum value of the ToF may indicate a minimum distance and a maximum distance from the conference control device 510.

AoA azimuth may indicate an azimuth angle at which an antenna receives radio waves, and may indicate information on an azimuth angle with respect to the conference control device 510.

AoA elevation may indicate an elevation angle at which the antenna receives radio waves, and may indicate information on an elevation angle with respect to the conference control device 510.

Based on at least one of the minimum value and the maximum value of the ToF, the AoA azimuth range information, and the AoA elevation range information, a three-dimensional spatial area with respect to the conference control device 510 may be defined. That is, an attendance area serving as a reference for determining whether a user is present at a conference may be defined.

In an embodiment, the attendance area may be defined based on distance information, azimuth information, or elevation information with respect to the conference control device 510.

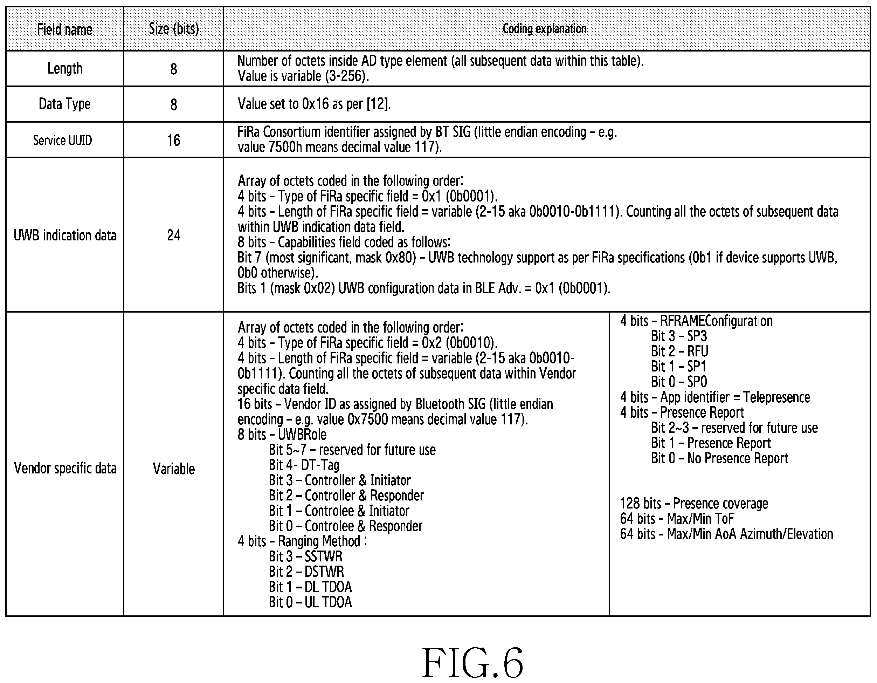

FIG. 6 illustrates configuration information according to an embodiment.

Referring to FIG. 6, configuration information for a UWB-based connection exchanged between a user terminal and a conference control device is illustrated. FIG. 6 may provide a detailed example of the configuration information described with reference to FIG. 5.

UWBRole indicates information indicating the role and type of a device. Through the UWBRole, the role and type of the conference control device or the user terminal in UWB communication may be defined.

Type information of the device may indicate a controller or a controlee.

The controller refers to a device that transmits a control message to define and control ranging features.

The controlee may refer to a device that uses ranging features configured via a control message from the controller.

Role information of the device may indicate an initiator or a responder.

The initiator may refer to a device that transmits a ranging initiation message (RIM) to initiate ranging.

The responder may refer to a device that responds to a ranging initiation message (RIM) from the initiator.

Ranging method indicates information indicating a ranging method.

SSTWR indicates a single-sided two-way ranging method.

In relation to SSTWR, a first round-trip time is measured from a time at which an initiator device transmits a message to a responder device until a time at which the initiator device receives a response from the responder device. The measured time may include a time taken by the responder device to respond and a time of flight of a radio wave occurring during transmission and reception of the message. Therefore, the time of flight (ToF) of a radio wave between the initiator device and the responder device may be calculated by subtracting the time taken by the responder device to respond from the first round-trip time and multiplying the result by 1/2. The calculated time of flight may be converted into distance information between the initiator device and the responder device by multiplying the time of flight by the speed of light.

DSTWR indicates a double-sided two-way ranging method.

DSTWR is a scheme in which a first round-trip time is measured based on a request transmitted from the initiator device to the responder device and a response thereto, and a second round-trip time is measured based on a response transmitted from the responder device to the initiator device and a corresponding message reception, so that a distance between the initiator device and the responder device may be calculated.

The time of flight (ToF) of a radio wave between the initiator device and the responder device may be calculated based on the first round-trip time, the second round-trip time, the time taken by the responder device to respond, and the time taken by the initiator device to respond.

RFRAMEconfiguration may indicate configuration information of a Ranging Frame.

RFRAMEconfiguration may indicate SP0, SP1, or SP3.

SP0 may indicate scrambled timestamp sequence (STS) Packet configuration 0, SP1 may indicate STS Packet configuration 1, and SP3 may indicate STS Packet configuration 3. The content regarding the STS Packet configuration may follow the content disclosed in the IEEE standard document.

RFRAME represents a Ranging Frame and may indicate a frame used for ranging. The RFRAME may include multiple UWB messages in a payload.

App identifier indicates an identifier of an application. The application identifier may indicate a telepresence service.

Presence Report may indicate whether a presence report is supported. When a presence report is performed, a responder device (e.g., a user terminal) or an initiator device (e.g., a conference control device) may transmit and receive a message required to generate information on whether a user is present, or may generate information indicating whether a user is present at a conference.

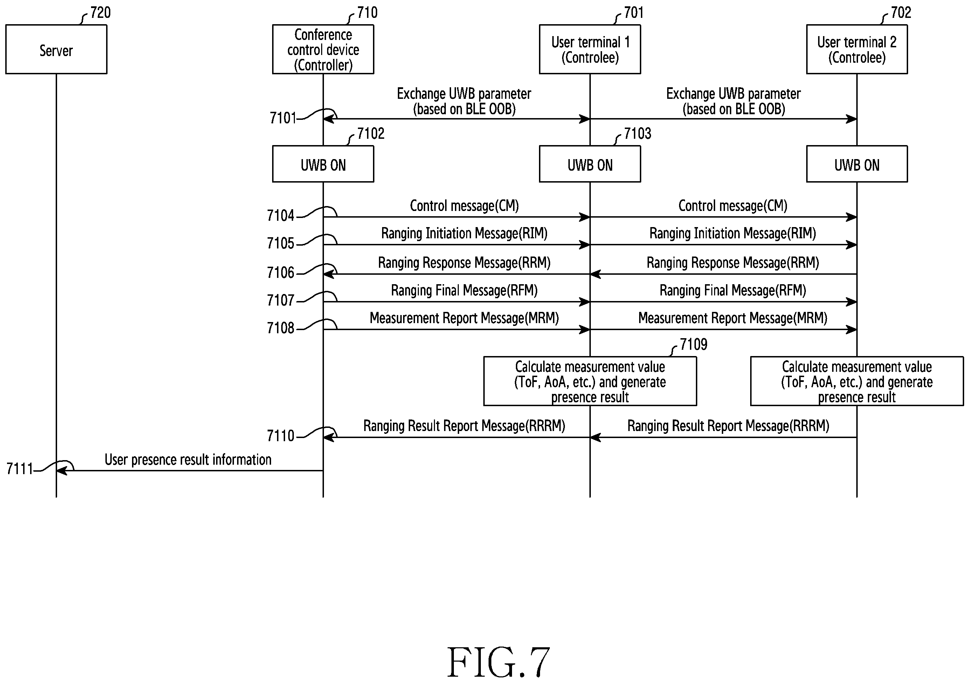

FIG. 7 illustrates a process of transmitting and receiving information between a conference control device and a user terminal according to an embodiment.

A conference control device 710, user terminals 701 and 702, and a server 720 illustrated in FIG. 7 may correspond to the conference control device, the user terminals, and the server described with reference to FIGS. 3 to 5, respectively.

Operation 7101 indicates an operation of exchanging UWB configuration information (or UWB parameters) between the conference control device 710 and the user terminals 701 and 702. Operation 7101 may be performed based on a Bluetooth out-of-band (OOB) connection scheme or a Bluetooth advertising message scheme. Alternatively, operation 7101 may be performed through higher-layer signaling. Operation 7101 may correspond to operation S1 of FIG. 4 or the operation described with reference to FIG. 5. The information exchanged between the conference control device 710 and the user terminals 701 and 702 through operation 7101 may include the parameters described with reference to FIG. 6.

Operations 7102 and 7103 represent operations of setting ultra-wideband (UWB) to an on state in order to perform UWB-based communication in the conference control device 710 and user terminal 1 701, respectively.

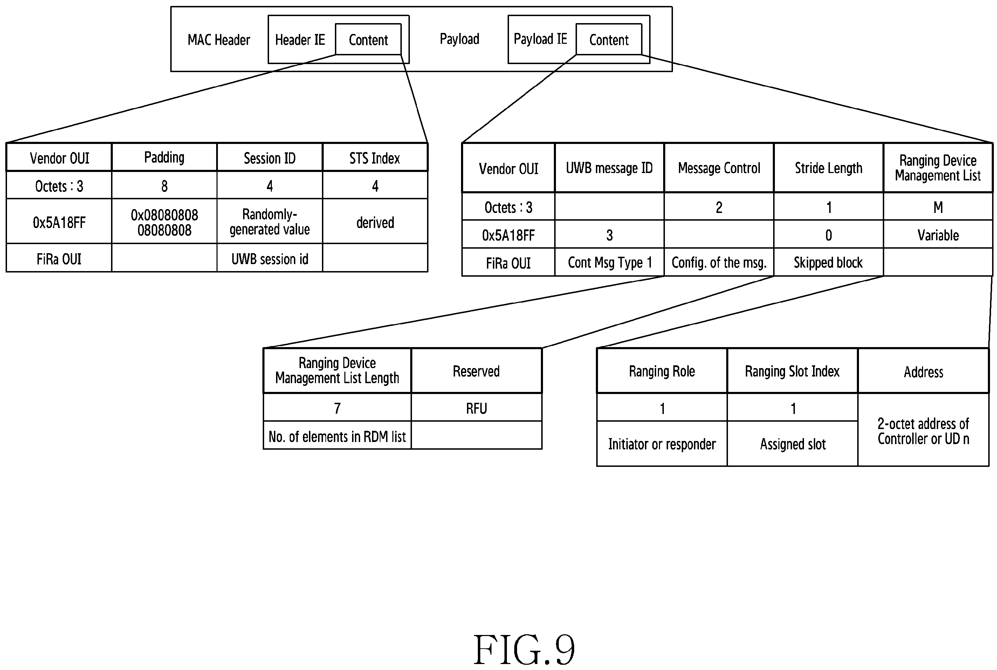

Operation 7104 represents an operation in which the conference control device 710 transmits a control message to the user terminal 1 701. Similarly, operation 7104 may represent an operation in which the user terminal 1 701 receives the control message from the conference control device 710. The control message may be a UWB message. The control message may include a header and a payload, and the header or the payload of the control message may include various parameters. (refer to FIG. 9)

Operation 7105 represents an operation in which the conference control device 710 transmits a ranging initiation message (RIM) to the user terminal 1 701. Similarly, operation 7105 may represent an operation in which the user terminal 1 701 receives the ranging initiation message from the conference control device 710. The ranging initiation message may indicate a signal (or request) transmitted by the conference control device 710 (or an initiator) to the user terminal 1 701 (or a responder) in order to calculate location information (e.g., distance or angle information) between the conference control device 710 and the user terminal 1 701.

Operation 7106 represents an operation in which the conference control device 710 receives a ranging response message (RRM) from the user terminal 1 701. Similarly, operation 7106 may represent an operation in which the user terminal 1 701 transmits the ranging response message to the conference control device 710. The ranging response message may indicate a response signal to the signal (or request) transmitted by the conference control device 710 (or the initiator) to the user terminal 1 701 (or the responder) in order to calculate the location information (e.g., distance or angle information) between the conference control device 710 and the user terminal 1 701.

Operation 7107 represents an operation in which the conference control device 710 transmits a ranging final message (RFM) to the user terminal 1 701. Similarly, operation 7107 may represent an operation in which the user terminal 1 701 receives the ranging final message from the conference control device 710. Operation 7107 may be omitted depending on a ranging method. For example, operation 7107 may be performed only when a ranging method is a DSTWR method.

Operation 7108 represents an operation in which the conference control device 710 transmits a measurement report message (MRM) to the user terminal 1 701. Similarly, operation 7108 may represent an operation in which the user terminal 1 701 receives the measurement report message from the conference control device 710. The measurement report message may include information required to calculate location information (e.g., distance or angle information) between the conference control device 710 and the user terminal 1 701. For example, the measurement report message may include a round-trip time of the message measured by the conference control device 710, an angle of arrival (AoA) azimuth value, or an elevation value.

Operation 7109 represents an operation in which the user terminal 1 701 generates information indicating whether a user is present, based on information included in the measurement report message and/or information measured by the user terminal 1 (e.g., a response time of the user terminal 1, etc.).

In operation 7109, the user terminal 1 701 may generate distance information between the conference control device 710 and the user terminal 1, and obtain location information of the user terminal 1 with respect to the conference control device 710, based on the information included in the measurement report message and/or the information measured by the user terminal 1 701. Accordingly, based on the corresponding location information, information indicating whether a user of the user terminal 1 is located within an attendance area of a conference location may be generated. The user terminal 1 701 may generate information indicating whether the user is present at a conference by comparing the distance information and the AoA azimuth value and AoA elevation value included in the measurement report message with reference information for determining whether the user is present at the conference (refer to FIG. 5).

Operation 7110 represents an operation in which the conference control device 710 receives a ranging result report message (RRRM) from the user terminal 1 701. Similarly, operation 7110 may represent an operation in which the user terminal 1 701 transmits the ranging result report message to the conference control device 710. The ranging result report message may include information indicating whether the user of the user terminal 1 is present at the conference.

Operation 7111 represents an operation in which the conference control device 710 transmits presence result information of the user to the server 720. Similarly, operation 7111 may represent an operation in which the server 720 receives the presence result information of the user from the conference control device 710. The presence result information of the user may include presence result information for multiple users. The server 720 may provide a telepresence conference service having various functions, based on the received presence result information of the user.

The operations performed between the conference control device 710 and the user terminal 1 701 in FIG. 7 may be equally applied to the conference control device 710 and user terminal 2 702.

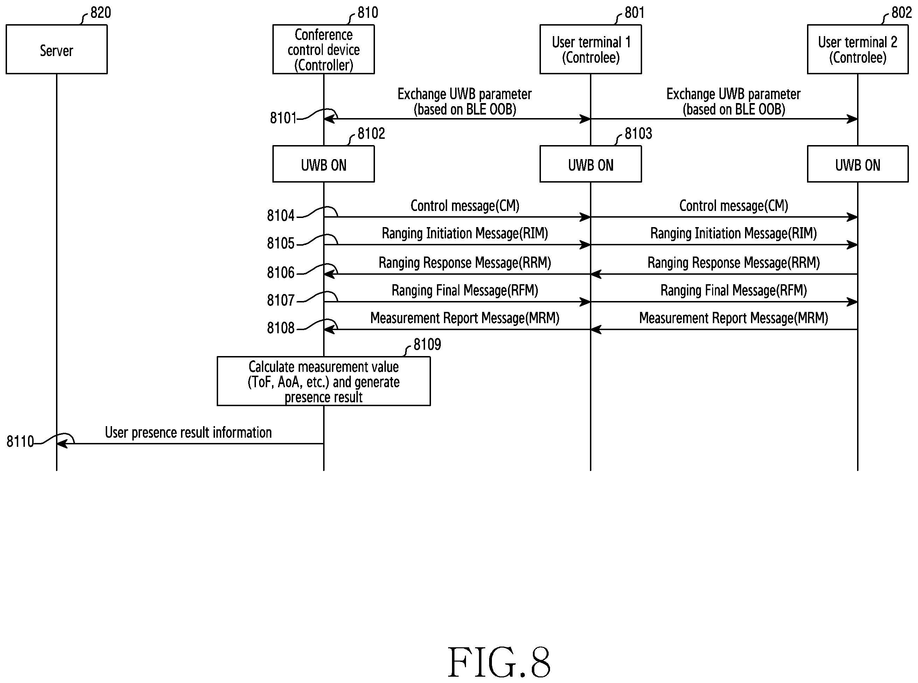

FIG. 8 illustrates a process of transmitting and receiving information between a conference control device and a user terminal according to an embodiment. The embodiment of FIG. 8 may differ from the embodiment of FIG. 7 in that a conference control device 810 may generate information indicating whether a user is present at a conference.

The conference control device 810, user terminals 801 and 802, and a server 820 illustrated in FIG. 8 may correspond to the conference control device, the user terminals, and the server described with reference to FIGS. 3 to 5 and FIG. 7, respectively.

Operation 8101 represents an operation of exchanging UWB configuration information (or UWB parameters) between the conference control device 810 and the user terminals 801 and 802. Operation 8101 may be performed based on a Bluetooth out-of-band (OOB) connection scheme or a Bluetooth advertising message scheme. Alternatively, operation 8101 may be performed through higher-layer signaling. Operation 8101 may correspond to operation S1 of FIG. 4 or the operation described with reference to FIG. 5. The information exchanged between the conference control device 810 and the user terminals 801 and 802 in operation 8101 may include the parameters described with reference to FIG. 6.

Operations 8102 and 8103 represent operations of setting ultra-wideband (UWB) to an on state in order to perform UWB-based communication in the conference control device 810 and user terminal 1 801, respectively.

Operation 8104 represents an operation in which the conference control device 810 transmits a control message to the user terminal 1 801. Similarly, operation 8104 may represent an operation in which the user terminal 1 801 receives the control message from the conference control device 810. The control message may be a UWB message. The control message may include a header and a payload, and the header or the payload of the control message may include various parameters. (refer to FIG. 9)

Operation 8105 represents an operation in which the conference control device 810 transmits a ranging initiation message (RIM) to the user terminal 1 801. Similarly, operation 8105 may represent an operation in which the user terminal 1 801 receives the ranging initiation message from the conference control device 810. The ranging initiation message may indicate a signal (or request) transmitted by the conference control device 810 (or an initiator) to the user terminal 1 801 (or a responder) in order to calculate location information (e.g., distance or angle information) between the conference control device 810 and the user terminal 1 801.

Operation 8106 represents an operation in which the conference control device 810 receives a ranging response message (RRM) from the user terminal 1 801. Similarly, operation 8106 may represent an operation in which the user terminal 1 801 transmits the ranging response message to the conference control device 810. The ranging response message may indicate a response signal to the signal (or request) transmitted by the conference control device 810 (or the initiator) to the user terminal 1 801 (or the responder) in order to calculate the location information (e.g., distance or angle information) between the conference control device 810 and the user terminal 1 801.

Operation 8107 represents an operation in which the conference control device 810 transmits a ranging final message (RFM) to the user terminal 1 801. Similarly, operation 8107 may represent an operation in which the user terminal 1 801 receives the ranging final message from the conference control device 810. Operation 8107 may be omitted depending on a ranging method. For example, operation 8107 may be performed only when a ranging method is a double-sided two-way ranging (DSTWR) method.

Operation 8108 represents an operation in which the conference control device 810 receives a measurement report message (MRM) from the user terminal 1 801. Similarly, operation 8108 may represent an operation in which the user terminal 1 801 receives the measurement report message from the conference control device 810. The measurement report message may include information required to calculate location information (e.g., distance or angle information) between the conference control device 810 and the user terminal 1 801. For example, the measurement report message may include a response time of the message measured by the user terminal 1 801, an angle of arrival (AoA) azimuth value, or an elevation value.

Operation 8109 represents an operation in which the conference control device 810 generates information indicating whether a user is present, based on information included in the measurement report message and/or information measured by the user terminal 810 (e.g., a message round-trip time, etc.).

In operation 8109, the conference control device 810 may generate distance information between the conference control device 810 and the user terminal 1, and obtain location information of the user terminal 1 with respect to the conference control device 810, based on the information included in the measurement report message and/or the information measured by the conference control device 810. Accordingly, based on the corresponding location information, information indicating whether a user of the user terminal 1 is located within an attendance area of a conference location may be generated. The conference control device 810 may generate information indicating whether the user is present at a conference by comparing the distance information and the AoA azimuth value and AoA elevation value included in the measurement report message with reference information for determining whether the user is present at the conference (refer to FIG. 5).

Operation 8110 represents an operation in which the conference control device 810 transmits presence result information of the user to the server 820. Similarly, operation 8110 may represent an operation in which the server 820 receives the presence result information of the user from the conference control device 810. The presence result information of the user may include presence result information for multiple users. The server 820 may provide a telepresence conference service having various functions, based on the received presence result information of the user.

The operations performed between the conference control device 810 and the user terminal 1 801 in FIG. 8 may be equally applied to the conference control device 810 and user terminal 2 802.

FIG. 9 illustrates information included in a control message according to an embodiment.

Referring to FIG. 9, a control message may include a header and a payload. The header of the control message may include content information, and the content information may include the following parameters.

A value of a vendor organizationally unique identifier (OUI) may indicate 0x5A18FF. When the value of the vendor OUI is not 0x5A18FF, a device may ignore a message. That is, the corresponding field may indicate whether the message is valid.

Padding may indicate known padding for integrity verification.

A session ID may indicate an identifier of a UWB session.

An STS Index may indicate an STS identifier of a current ranging slot.

The payload of the control message may include content information, and the content information of the payload may include the following parameters.

A UWB message ID is an identifier indicating that the message is a control message. That is, the type of the message may be identified according to a UWB message ID value.

Message control may indicate configuration information of the message. The message control may include a ranging device management list (RDML) length field.

Stride Length may indicate the number of blocks to be skipped until the next ranging is performed.

A RDML length field may indicate the number of elements included in an RDML field. A value of the RDML length field may be equal to the number of RDML elements.

The RDML elements may include the following.

Ranging device management list (RDML)

Ranging Role may indicate whether a device is an initiator or a responder.

Ranging Slot Index may indicate an identifier of a slot allocated for ranging.

Address may indicate address information of a device that performs ranging.

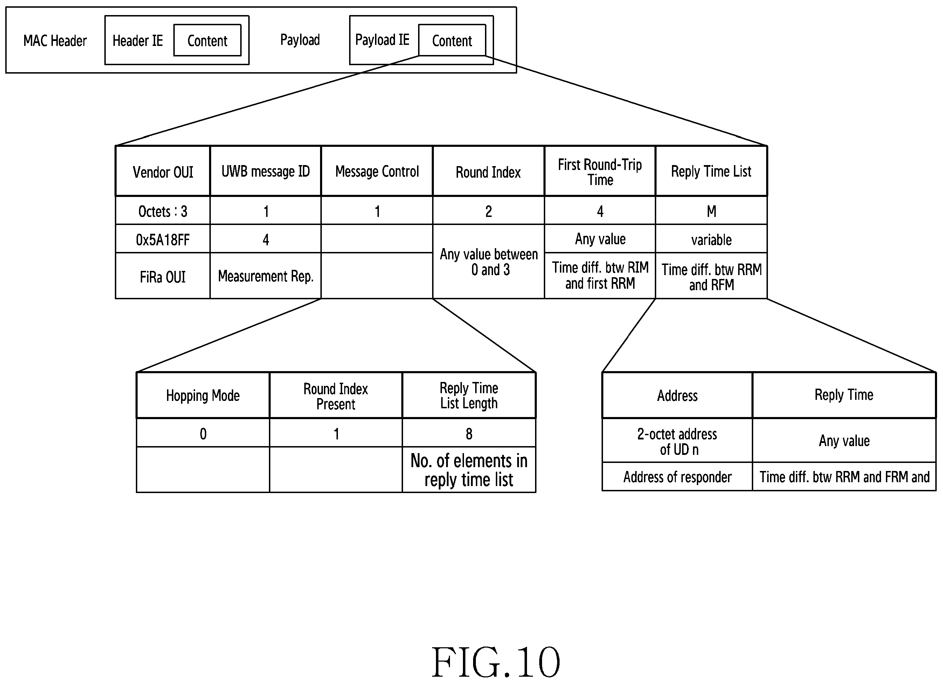

FIG. 10 illustrates information included in a measurement report message according to an embodiment.

Referring to FIG. 10, a measurement report message may include a header and a payload.

The payload of the measurement report message may include content information, and the content information of the payload may include the following parameters.

A value of a vendor organizationally unique identifier (OUI) may indicate 0x5A18FF. When the value of the Vendor OUI is not 0x5A18FF, a device may ignore a message. That is, the corresponding field may indicate whether the message is valid.

A UWB message ID is an identifier indicating that the message is a measurement report message. That is, the type of the message may be identified according to a UWB message ID value.

Message control may indicate configuration information of the message. The message control may include fields such as Hopping mode, Round Index present, and/or Reply time list length.

Hopping mode may indicate whether a ranging round following a hopping sequence is used for the next ranging.

Round index present may indicate whether a Round Index field is present. If a measurement report is transmitted by a controller device, a value of the Round Index present may be configured to be 1.

Reply time list length indicates the number of elements included in a Reply time list field.

Round index may indicate a ranging round index to be used in the next ranging block. The round index field may be valid when the measurement report message is transmitted by the controller device.

First Round-Trip time may indicate a difference between a time at which a ranging initiation message (RIM) is transmitted from an initiator and a time at which a ranging response message (RRM) is received from a responder. When the measurement report message is transmitted by the responder, the corresponding field may indicate a difference between a time at which the responder transmits the ranging response message and a time at which the responder receives a ranging final message from the initiator.

Reply time list may include a Reply time field and an Address field.

The Reply time field may indicate a response time of the responder. The response time of the responder may indicate a time elapsed from a time at which the responder receives a message from the initiator to a time at which the responder transmits a response message.

The Address field may indicate an address of the responder. In this case, the responder may indicate a responder associated with the Reply time field described above.

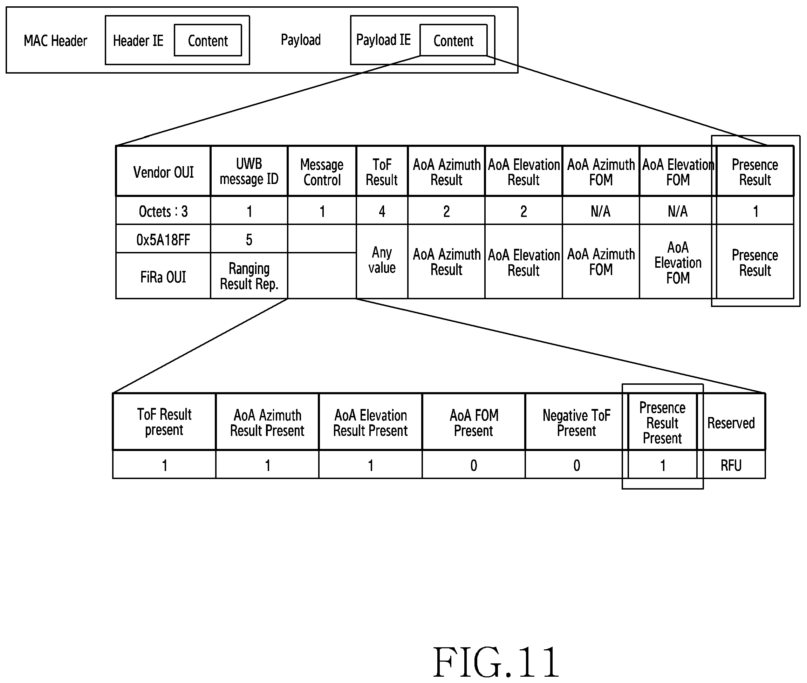

FIG. 11 illustrates information included in a ranging result report message according to an embodiment.

Referring to FIG. 11, a ranging result report message may include a header and a payload.

The payload of the ranging result report message may include content information, and the content information of the payload may include the following parameters.

A value of a vendor organizationally unique identifier (OUI) may indicate 0x5A18FF. When the value of the Vendor OUI is not 0x5A18FF, a device may ignore a message. That is, the corresponding field may indicate whether the message is valid.

UWB message ID is an identifier indicating that the message is a ranging result report message. That is, the type of the message may be identified according to a UWB message ID value.

Message control may indicate configuration information of the message. The message control may include fields such as ToF result present, AoA azimuth result present, AoA elevation result present, AoA FOM present, Negative ToF present, and/or Presence present.

ToF result present indicates whether a time of flight (ToF) value is present.

AoA azimuth result present may indicate whether an AoA azimuth value is present.

AoA elevation result present may indicate whether an AoA elevation value is present.

AoA FOM present may indicate whether an AoA azimuth FOM field or an AoA elevation FOM field is present. AoA FOM may indicate an estimation of the accuracy or reliability of a measured AoA value (azimuth or elevation).

Negative ToF present indicates whether a ToF result value is negative.

Presence present may indicate whether a Presence field is present.

A ToF result may indicate a measured time of flight (ToF) value. The ToF result may indicate a time taken for a radio wave to travel between a responder and an initiator and may be converted into a distance value.

An AoA azimuth result may indicate a measured AoA azimuth value.

An AoA elevation result may indicate a measured AoA elevation value.

An AoA azimuth FOM may indicate the reliability of the AoA azimuth value.

An AoA elevation FOM may indicate the reliability of the AoA elevation value.

A presence result may indicate whether a user is present at a conference. For example, when the initiator is a conference control device and the responder is a user terminal, whether the user is present at the conference may be determined based on whether the user terminal is located within a conference attendance area.

The responder (e.g., the user terminal) may generate information indicating whether the user is present at the conference (e.g., Presence result), based on the configured reference information (refer to the description of FIG. 5) and the measured AoA azimuth, AoA elevation, or ToF value, and may transmit the generated information to the initiator (e.g., the conference control device) through the ranging result report message.

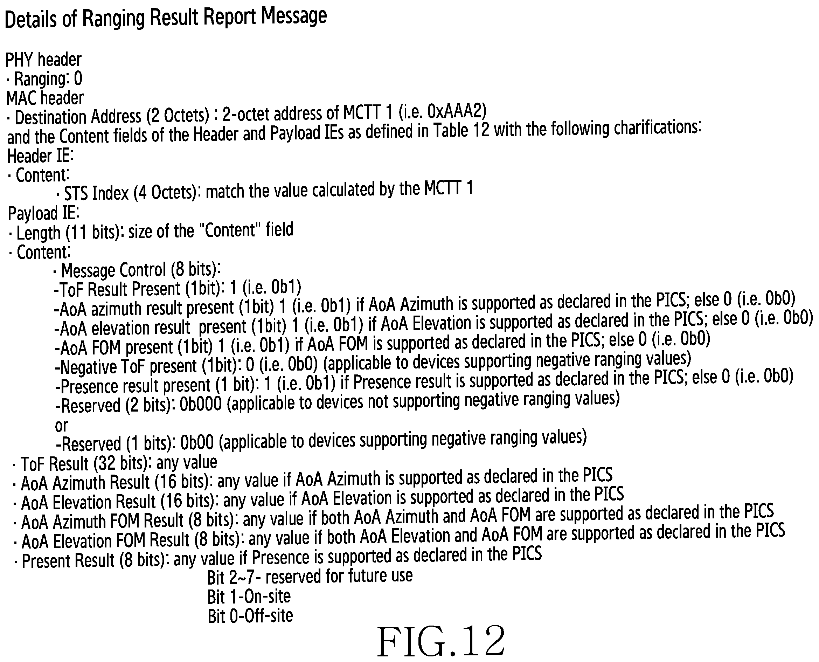

FIG. 12 illustrates detailed information of a ranging result report message according to an embodiment.

Referring to FIG. 12, a payload information element (IE) of a ranging result report message may include a content field, and the size of the content field may be 11 bits.

Content may include Message control (8 bits), ToF result (32 bits), AoA azimuth result (16 bits), AoA elevation result (16 bits), AoA azimuth FOM result (8 bits), AoA elevation FOM result (8 bits), and/or Presence result (8 bits).

Message control may include ToF result present (1 bit), AoA azimuth result present (1 bit), AoA elevation result present (1 bit), AoA FOM present (1 bit), Negative ToF present (1 bit), and/or Presence result present (1 bit). The descriptions of the above-described fields have been provided with reference to FIG. 11 and thus are omitted.

Present result may indicate whether a user terminal is located within an attendance area of a conference location. For example, a value of 1 may indicate that the user terminal is located within the attendance area, and a value of 0 may indicate that the user terminal is located outside the attendance area. When the user terminal is located within the attendance area, a user may be determined to be present at a conference, and when the user terminal is located outside the attendance area, the user may be determined not to be present at the conference.

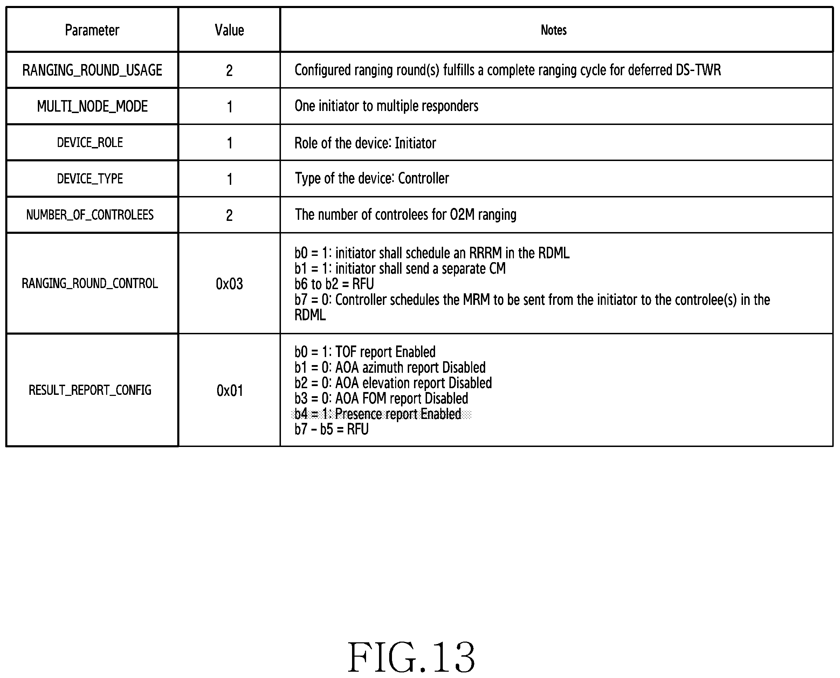

FIG. 13 illustrates UWB configuration information according to an embodiment.

Referring to FIG. 13, UWB configuration information may represent an example of configuration information for a controller device having an initiator role.

In an embodiment, the controller device having the initiator role may correspond to a conference control device.

The UWB configuration information may include Ranging_round_usage, Multi_node_mode, device_role, device_type, Number of controlees, ranging_round_control, and/or result_report_config.

Ranging_round_usage may indicate a ranging method. For example, the ranging method may include One way ranging, Single-sided two-way ranging, and Double-sided two-way ranging, and Ranging_round_usage may indicate which ranging method is used.

Multi_node_mode may indicate a mode of a node participating in ranging. A value of 0 may indicate Unicast ranging, a value of 1 may indicate One-to-many Ranging, and a value of 2 may indicate Many-to-Many Ranging.

Device_role may indicate the role of a device. For example, a value of 0 may indicate that the device has a responder role, and a value of 1 may indicate that the device has an initiator role.

Device_type may indicate the type of the device. For example, a value of 0 may indicate that the device is of a controlee type, and a value of 1 may indicate that the device is of a controller type.

Number_of_controlees may indicate the number of controlees in a one-to-many ranging method.

Ranging_round_control may define messages transmitted and received for ranging. Ranging_round_control may define information in a bitmap format as follows.

For example, when a b0 value is 1, an initiator schedules a ranging result report message (RRRM). When a b1 value is 1, the initiator transmits a separate control message. When a b7 value is 1, a controller schedules a measurement report message (MRM) transmitted from the initiator to a controlee. Unlike the above example, various pieces of information may be configured through Ranging_round_control depending on a ranging method.

Result_report_config may indicate information included in a ranging result report message (RRRM) or a measurement report message (MRM). Whether a ToF report, an AoA azimuth report, an AoA elevation report, and/or a Presence report is enabled or disabled may be defined in a bitmap format.

For example, the b0 value may indicate whether the ToF report is enabled, and the b1 value may indicate whether the AoA azimuth report is enabled. A b2 value may indicate whether the AoA elevation report is enabled, and a b3 value may indicate whether an AoA FOM report is enabled. A b4 value may indicate whether the Presence report is enabled.

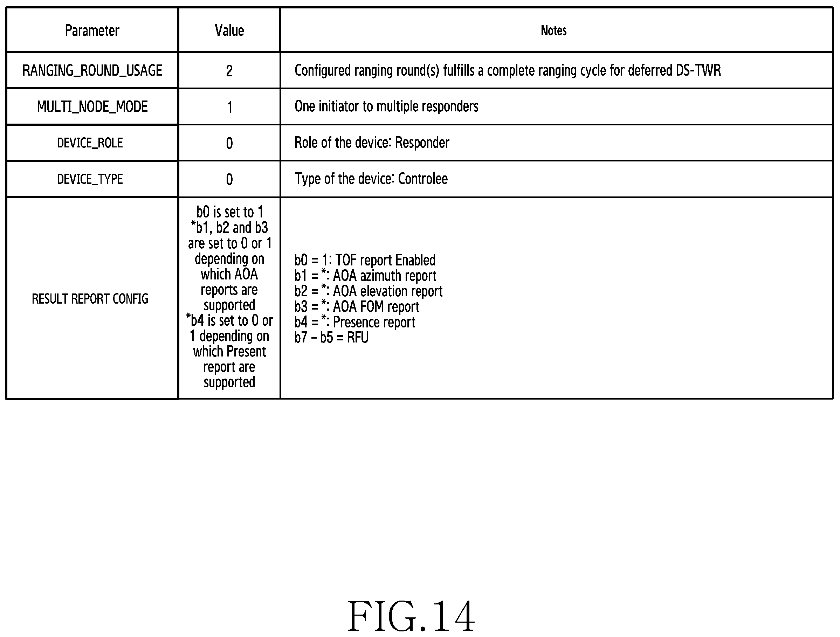

FIG. 14 illustrates UWB configuration information according to an embodiment.

Referring to FIG. 14, UWB configuration information may represent an example of configuration information for a controlee device having a responder role.

In an embodiment, the controlee device having the responder role may correspond to a terminal of a user who is to participate in a conference.

Descriptions of parameters illustrated in FIG. 14 have been provided with reference to FIG. 13 and thus are omitted.

Although not illustrated in FIG. 14, Result_report_config may include information indicating whether a Presence report is enabled (e.g., the b4 value of FIG. 13).

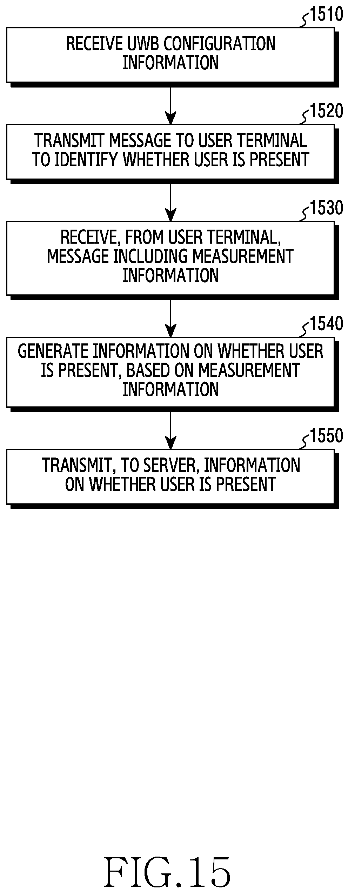

FIG. 15 illustrates a flowchart of an operation of a conference control device according to an embodiment.

Operations described in FIG. 15 may indicate the operations performed by the conference control device of FIGS. 3 to 5 and 7 and 8.

Operation 1510 represents an operation in which a conference control device receives UWB configuration information. The UWB configuration information may include the parameters described with reference to FIG. 5, 6, or 13. Operation 1510 may be performed based on a Bluetooth advertising message or a Bluetooth out-of-band (OOB) connection.

Operation 1520 represents an operation in which the conference control device transmits a message to a user terminal in order to identify whether a user is present. The message transmitted from the conference control device to the user terminal may include at least one of a control message, a ranging initiation message, a ranging final message, and/or a measurement report message. Descriptions of the messages have been provided with reference to FIGS. 7 and 8 and are thus omitted.

Operation 1530 may represent an operation in which the conference control device receives, from the user terminal, a message including measurement information. The conference control device may receive the message as a response to the message transmitted in operation 1520. The message received by the conference control device may include at least one of a Ranging response message, a Measurement report message, and/or a Ranging result report message. Descriptions of the messages have been provided with reference to FIGS. 7 and 8 and thus are omitted.

Operation 1540 represents an operation in which the conference control device generates information on whether the user is present. The conference control device may generate the information on whether the user is present, based on data directly measured by the conference control device and data received from the user terminal. For example, the conference control device may calculate distance information of the user terminal, based on a round-trip time of the message and a response time of the user terminal. In addition, the conference control device may calculate direction information from the conference control device toward the user terminal, based on an AoA azimuth value and/or an AoA elevation value. Ultimately, the conference control device may identify whether the corresponding user terminal is located within an attendance area of a conference location, based on the distance information and the direction information, and may generate the information on whether the user is present. The information on whether the user is present may correspond to the Presence result described with reference to FIG. 11.

Operation 1550 represents an operation in which the conference control device transmits, to a telepresence server, the information on whether the user is present. The conference control device may generate information on whether multiple users are present, and transmit the generated information to the telepresence server. The telepresence server may provide a service function related to a remote video meeting by using the information on whether the users are present. For example, the telepresence server may calculate an integrated online/offline attendance rate of the corresponding meeting, and may use the corresponding information for a decision-making function based on voting of attendees.

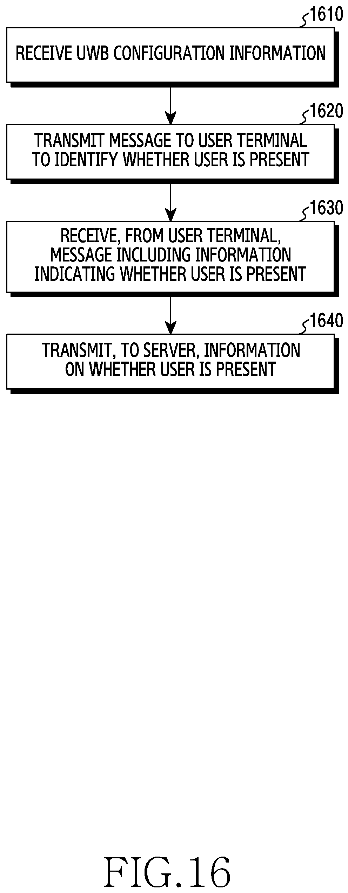

FIG. 16 illustrates a flowchart of an operation of a conference control device according to an embodiment.

Operations described in FIG. 16 may indicate the operations performed by the conference control device of FIGS. 3 to 5 and 7 and 8.

In the embodiment described in FIG. 16, a user terminal generates information on whether a user is present, and transmits the information to a conference control device.

Operation 1610 represents an operation in which the conference control device receives UWB configuration information. The UWB configuration information may include the parameters described with reference to FIG. 5, 6, or 13. Operation 1610 may be performed based on a Bluetooth advertising message or a Bluetooth out-of-band (OOB) connection.

Operation 1620 represents an operation in which the conference control device transmits a message to the user terminal in order to identify whether a user is present. The message transmitted from the conference control device to the user terminal may include at least one of a control message, a ranging initiation message, a ranging final message, and/or a measurement report message. Descriptions of the messages have been provided with reference to FIGS. 7 and 8 and thus are omitted.

The conference control device may receive the message as a response to the transmitted message. In this case, the message received by the conference control device may include at least one of a ranging response message and/or a measurement report message. Descriptions of the messages have been provided with reference to FIGS. 7 and 8 and thus are omitted.

Operation 1630 represents an operation in which the conference control device receives, from the user terminal, a message including information on whether the user is present at a conference. The corresponding message may be a ranging result report message.

Prior to operation 1630, the user terminal may generate the information on whether the user is present, based on data directly measured by the user terminal and data received from the conference control device. For example, the user terminal may calculate a distance between the user terminal and the conference control device, based on a message round-trip time measured by the conference control device, a message round-trip time measured by the user terminal, a response time of the user terminal, or a response time of the conference control device. In addition, the user terminal may calculate direction information, based on an AoA azimuth value or an AoA elevation value. Ultimately, the user terminal may identify whether the user terminal is located within an attendance area of a conference location, based on distance information and the direction information, and may generate the information on whether the user is present. The information on whether the user is present may correspond to the Presence result described with reference to FIG. 11. The user terminal may transmit, to the conference control device, a ranging result report message including the information on whether the user is present.

Operation 1640 represents an operation in which the conference control device transmits, to a telepresence server, the information on whether the user is present. The conference control device may generate information on whether multiple users are present, and transmit the generated information to the telepresence server. The telepresence server may provide a service function related to a remote video meeting by using the information on whether the users are present. For example, the telepresence server may calculate an integrated online/offline attendance rate of the corresponding meeting, and may use the corresponding information for a decision-making function based on voting of attendees.

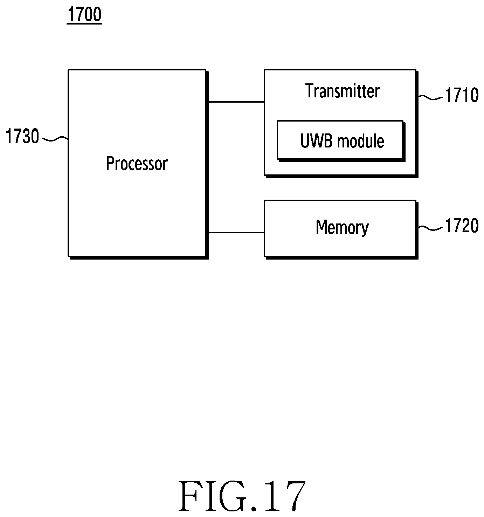

FIG. 17 illustrates components of a device according to an embodiment.

FIG. 17 illustrates components of a device according to an embodiment of the disclosure. The device of FIG. 17 may correspond to the user terminal or the conference control device described with reference to FIGS. 3 to 16. In addition, the device of FIG. 17 may also correspond to the server of FIGS. 4, 7, and 8.

Referring to FIG. 17, a device 1700 according to an embodiment includes a transceiver 1710, a processor 1730 connected to the transceiver 1710, and a memory 1720 connected to the processor 1730. The device 1700 of FIG. 17 may perform the operations described with reference to FIGS. 3 and 16.

The device 1700 may include more or fewer components than the above-described components. In addition, the transceiver 1710, the processor 1730, and the memory 1720 may be implemented as a single chip.

The transceiver 1710 collectively refers to a receiver and a transmitter, and may transmit and receive a signal to and from another device. Information transmitted and received may include control information, data, and other signaling information. The transceiver 1710 may include an RF transmitter for up-converting and amplifying a frequency of a transmission signal, and an RF receiver for low-noise amplifying and down-converting a frequency of a reception signal. However, this is merely an example of the transceiver 1710, and components of the transceiver 1710 are not limited to the RF transmitter and the RF receiver. The transceiver 1710 may receive a signal through a wireless channel and output the signal to the processor 1730, and may transmit the signal output from the processor 1730 through the wireless channel.

In an embodiment, the transceiver 1710 may include a UWB module. UWB is a wireless communication technology using a bandwidth of 500 MHz or more according to the IEEE 802.15.4 standard, and may be used to measure an accurate distance and angle due to its characteristic of using a wide frequency band. In the IEEE 802.15.4z standard, security has been enhanced and availability has been increased by introducing a scrambled timestamp sequence (STS) function at a physical layer to prevent an external attacker from accessing or manipulating UWB communication.

The memory 1720 may store programs and data necessary for an operation of the device. In addition, the memory 1720 may store control information or data included in a signal acquired from the device. The memory 1720 may be a storage medium such as a read-only memory (ROM), a random access memory (RAM), a hard disk, a CD-ROM, or a DVD, or a combination of storage media.

The processor 1730 may control a series of processes such that the device operates as described above. For example, the transceiver 1810 may receive a data signal including a transmitted message, and the processor 1830 may identify a result of receiving the transmitted data signal.

A method performed by a conference control device according to embodiments of the disclosure may include the operations of exchanging, with a user terminal, configuration information for identifying whether a user is present at a conference, transmitting, to the user terminal, a control message for identifying whether the user is present at the conference, transmitting, to the user terminal, an initiation message for measuring a location of the user, receiving, from the user terminal, a response message corresponding to the initiation message, transmitting a measurement report message to the user terminal, and receiving, from the user terminal, a result report message indicating whether the user is present at the conference.

The operation of exchanging, with the user terminal, the configuration information for identifying whether the user is present at the conference may correspond to operation S1 of FIG. 4, the operation described with reference to FIG. 5, operation 7101 of FIG. 7, or operation 8101 of FIG. 8. In this case, the configuration information may include parameter information described with reference to FIGS. 5, 6, 13, or 14.

In an embodiment, the operation of exchanging, with the user terminal, the configuration information for identifying whether the user is present at the conference may be performed based on a Bluetooth advertising message or a Bluetooth out-of-band (OOB) connection.

In an embodiment, the configuration information may include an application identifier (e.g., App ID) for a conference service, reference information (e.g., a minimum ToF value, a maximum ToF value, AoA azimuth range information, or AoA elevation range information) for determining whether the user is present at the conference, or information indicating whether the user terminal supports a conference presence report. In addition, the reference information for determining whether the user is present at the conference may include distance information and angle information related to the conference control device. The distance information related to the conference control device includes a maximum value or a minimum value of a time of flight (ToF). Although the ToF value refers to a term indicating a time of flight of a radio wave, the ToF value may be multiplied by the speed of light and converted into distance information, and thus may be referred to as distance information. The angle information may include azimuth range information and elevation range information of an angle of arrival (AoA).

In an embodiment, the configuration information may include ultra-wideband (UWB) configuration information, and the UWB configuration information may include information indicating whether a device role is an initiator or a responder, information indicating whether a device type is a controller or a controlee, and information indicating whether a device supports a conference presence report. In this case, whether the device supports the conference presence report may indicate, for the user terminal, whether the user terminal is able to generate information on whether the user is present at the conference by transmitting and receiving a message to and from the conference control device, and report the information to the conference control device. In addition, whether the device supports the conference presence report may indicate, for the conference control device, whether the conference control device is able to generate information on whether the user is present at the conference by transmitting and receiving a message to and from the user terminal.

In an embodiment, the configuration information may be provided from a server configured to provide a conference service. In addition, the configuration information may be provided through higher-layer signaling.

In an embodiment, the result report message may include a time of flight (ToF) value, an angle of arrival (AoA) azimuth value, and an AoA elevation value measured with respect to the user terminal, or information indicating whether the user is present at the conference.

In an embodiment, the information indicating whether the user is present at the conference may be generated based on at least one of a time of flight (ToF) value, an angle of arrival (AoA) azimuth value, and an AoA elevation value, and the reference information.

In an embodiment, the conference control device may further include an operation of transmitting the information indicating whether the user is present at the conference to the server that provides the conference service.

In an embodiment, the operation of transmitting, to the user terminal, the control message for identifying whether the user is present at the conference may correspond to operation 7104 of FIG. 7 or operation 8104 of FIG. 8. In addition, the operation of transmitting, to the user terminal, the initiation message for measuring the location of the user may correspond to operation 7105 of FIG. 7 or operation 8105 of FIG. 8. In addition, the operation of receiving, from the user terminal, the response message corresponding to the initiation message may correspond to operation 7106 of FIG. 7 or operation 8106 of FIG. 8. In addition, the operation of transmitting the measurement report message to the user terminal may correspond to operation 7108 of FIG. 7. In addition, the operation of receiving, from the user terminal, the result report message indicating whether the user is present at the conference may correspond to operation 7110 of FIG. 7.

A method performed by a conference control device according to an embodiment of the disclosure may include the operations of exchanging, with a user terminal, configuration information for identifying whether a user is present at a conference, transmitting, to the user terminal, a control message for identifying whether the user is present at the conference, transmitting, to the user terminal, an initiation message for measuring a location of the user, receiving, from the user terminal, a response message corresponding to the initiation message, receiving a measurement report message from the user terminal, generating information indicating whether the user is present at the conference, and transmitting, to a server configured to provide a conference service, the information indicating whether the user is present at the conference. The conference control device may generate the information indicating whether the user is present at the conference, based on information received from the user terminal through the measurement report message, and may transmit the corresponding information to the server. The measurement report message may include a ToF value, an AoA azimuth value, an AoA elevation value, or information on a time taken by the user terminal to respond to the initiation message.

In an embodiment, the information indicating whether the user is present at the conference may be generated based on at least one of a time of flight (ToF) value , an angle of arrival (AoA) azimuth value, and an AoA elevation value measured with respect to the user terminal.

In an embodiment, the operation of receiving the measurement report message from the user terminal may correspond to operation 8108 of FIG. 8. In addition, the operation of generating the information indicating whether the user is present at the conference may correspond to operation 8109 of FIG. 8. In addition, the operation of transmitting, to the server configured to provide the conference service, the information indicating whether the user is present at the conference may correspond to operation 8110 of FIG. 8.

A method performed by a user terminal according to an embodiment of the disclosure may include the operations of exchanging, with a conference control device, configuration information for identifying whether a user is present at a conference, receiving, from the conference control device, a control message for identifying whether the user is present at the conference, receiving, from the conference control device, an initiation message for measuring a location of the user, transmitting, to the conference control device, a response message corresponding to the initiation message, receiving a measurement report message from the conference control device, generating information indicating whether the user is present at the conference, and transmitting, to the conference control device, a result report message indicating whether the user is present at the conference.

In an embodiment, the operation of generating the information indicating whether the user is present at the conference may correspond to operation 7109 of FIG. 7.

A conference method performed by a user terminal according to an embodiment of the disclosure may include the operations of exchanging, with a conference control device, configuration information for identifying whether a user is present at a conference, receiving, from the conference control device, a control message for identifying whether the user is present at the conference, receiving, from the conference control device, an initiation message for measuring a location of the user, transmitting, to the conference control device, a response message corresponding to the initiation message, and transmitting a measurement report message to the conference control device, wherein the measurement report message includes information for determining whether the user is present at the conference. Here, the information for determining whether the user is present at the conference may include at least one of a time of flight (ToF) value, an angle of arrival (AoA) azimuth value, and/or an AoA elevation value measured with respect to the user terminal.

According to embodiments of the disclosure, a useful function may be provided for a telepresence conference service. For example, among people participating in a conference online or offline, a person who is physically present at the conference may be distinguished, thereby facilitating a decision-making determination based on voting in a remote conference.

In addition, according to embodiments of the disclosure, in a process of determining whether people who are to attend the conference are present, the conference control device and the user terminal may exchange configuration information with each other through a Bluetooth advertising message or a Bluetooth OOB connection scheme, thereby reducing power consumption.

In addition, according to embodiments of the disclosure, in the process of determining whether people who are to attend the conference are present, location information of the user terminal may be generated through a UWB-based message, thereby increasing accuracy and reliability of the information indicating whether the user is present at the conference.

Advantageous effects obtainable from the disclosure may not be limited to the above-mentioned effects, and other effects which are not mentioned herein may be clearly understood from the following description by those skilled in the art to which the disclosure pertains.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a device for performing an embodiment of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

In the disclosure, the term "unit" or "module" may refer to a hardware component such as a processor or circuit, and/or a software component executed by a hardware component such as a processor.

The "unit" or "module" may be stored in an addressable storage medium and may be implemented by a program executable by a processor. For example, the "unit" or "module" may be implemented by elements such as software elements, object-oriented software elements, class elements, and task elements, processes, functions, attributes, procedures, sub-routines, segments of program codes, drivers, firmware, micro-codes, circuits, data, databases, data structures, tables, arrays, and parameters.

Particular implementations described herein are merely an embodiment, and do not limit the scope of the disclosure in any way. For the brevity and conciseness of the specification, a description of conventional electronic components, control systems, software, and other functional aspects of these systems may be omitted.

Also, as used herein, the expression "including at least one of a, b, or c" may mean "including only a", "including only b", "including only c", "including a and b", "including b and c", "including a and c", or "including a, b, and c all".

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a conference control device, the method comprising:
exchanging, with a user terminal, configuration information for identifying whether a user is present at a conference;
transmitting, to the user terminal, a control message for identifying whether the user is present at the conference;
transmitting, to the user terminal, an initiation message for measuring a location of the user;
receiving, from the user terminal, a response message corresponding to the initiation message;
transmitting, to the user terminal, a measurement report message; and
receiving, from the user terminal, a result report message indicating whether the user is present at the conference.

2. The method of claim 1, wherein the configuration information comprises an application identifier for a conference service, reference information for determining whether the user is present at the conference, or information indicating whether a conference presence report is supported.

3. The method of claim 2, wherein the reference information for determining whether the user is present at the conference comprises distance information and angle information related to the conference control device.

4. The method of claim 3, wherein the distance information comprises a maximum value or a minimum value of a time of flight (ToF), and
wherein the angle information comprises azimuth range information of an angle of arrival (AoA) or AoA elevation range information.

5. The method of claim 1, wherein the configuration information comprises ultra-wideband (UWB) configuration information, and
wherein the UWB configuration information comprises
information indicating whether a device role is an initiator or a responder,
information indicating whether a device type is a controller or a controlee, and
information indicating whether a device supports a conference presence report.

6. The method of claim 4, wherein the result report message comprises a time of flight (ToF) value, an angle of arrival (AoA) azimuth value, and an AoA elevation value measured with respect to the user terminal, or information indicating whether the user is present at the conference, and
wherein the information indicating whether the user is present at the conference is generated based on at least one of the time of flight (ToF) value, the angle of arrival (AoA) azimuth value, and the AoA elevation value, and the reference information.

7. The method of claim 1, further comprising transmitting, to a server configured to provide a conference service, information indicating whether the user is present at the conference,
wherein the exchanging of, with the user terminal, the configuration information for identifying whether the user is present at the conference is performed based on a Bluetooth advertising message or a Bluetooth out-of-band (OOB) connection.

8. A method performed by a conference control device, the method comprising:
exchanging, with a user terminal, configuration information for identifying whether a user is present at a conference;
transmitting, to the user terminal, a control message for identifying whether the user is present at the conference;
transmitting, to the user terminal, an initiation message for measuring a location of the user;
receiving, from the user terminal, a response message corresponding to the initiation message;
receiving, from the user terminal, a measurement report message;
generating information indicating whether the user is present at the conference; and
transmitting, to a server configured to provide a conference service, information indicating whether the user is present at the conference,
wherein the information indicating whether the user is present at the conference is generated based on at least one of a time of flight (ToF) value, an angle of arrival (AoA) azimuth value, and an AoA elevation value measured with respect to the user terminal.

9. A method performed by a user terminal, the method comprising:
exchanging, with a conference control device, configuration information for identifying whether a user is present at a conference;
receiving, from the conference control device, a control message for identifying whether the user is present at the conference;
receiving, from the conference control device, an initiation message for measuring a location of the user;
transmitting, to the conference control device, a response message corresponding to the initiation message;
receiving, from the conference control device, a measurement report message;
generating information indicating whether the user is present at the conference; and
transmitting, to the conference control device, a result report message indicating whether the user is present at the conference.

10. The method of claim 9, wherein the configuration information comprises an application identifier for a conference service, reference information for determining whether the user is present at the conference, or information indicating whether a conference presence report is supported.

11. The method of claim 10, wherein the reference information for determining whether the user is present at the conference comprises distance information or angle information configured based on the conference control device.

12. The method of claim 11, wherein the distance information comprises a maximum value or a minimum value of a time of flight (ToF), and
wherein the angle information comprises azimuth range information of an angle of arrival (AoA) and AoA elevation range information.

13. The method of claim 9, wherein the configuration information comprises ultra-wideband (UWB) configuration information,
wherein the UWB configuration information comprises
information indicating whether a device role is an initiator or a responder,
information indicating whether a device type is a controller or a controlee, and
information indicating whether a device supports a conference presence report, and
wherein the exchanging of the configuration information is performed based on a Bluetooth advertising message or a Bluetooth out-of-band (OOB) connection.

14. The method of claim 12, wherein the result report message comprises a time of flight (ToF) value, an angle of arrival (AoA) azimuth value, and an AoA elevation value measured with respect to the user terminal, or the information indicating whether the user is present at the conference, and
wherein the information indicating whether the user is present at the conference is generated based on at least one of the time of flight (ToF) value, the angle of arrival (AoA) azimuth value, and the AoA elevation value, and the reference information.

15. A method performed by a user terminal, the method comprising:
exchanging, with a conference control device, configuration information for identifying whether a user is present at a conference;
receiving, from the conference control device, a control message for identifying whether the user is present at the conference;
receiving, from the conference control device, an initiation message for measuring a location of the user;
transmitting, to the conference control device, a response message corresponding to the initiation message; and
transmitting, to the conference control device, a measurement report message,
wherein the measurement report message comprises information for determining whether the user is present at the conference, and
wherein the information for determining whether the user is present at the conference comprises at least one of a time of flight (ToF) value, an angle of arrival (AoA) azimuth value, and an AoA elevation value measured with respect to the user terminal.
